# EUROPÄISCHE PATENTSCHRIFT

(11) **EP 2 153 269 B1**
(45) Veröffentlichungstag und Bekanntmachung des Hinweises auf die Patenterteilung: **04.05.2011**
(21) Anmeldenummer: 07856029.9
(22) Anmeldetag: 26.11.2007
(51) Int. Cl.: G02B 27/22, G03B 35/24, H04N 13/00

(54) **VERFAHREN ZUR AUSRICHTUNG EINES PARALLAXENBARRIERESCHIRMS AUF EINEM BILDSCHIRM**
METHOD FOR THE ORIENTATION OF A PARALLAX BARRIER SCREEN ON A DISPLAY SCREEN
PROCÉDÉ PERMETTANT D'ALIGNER UN ÉCRAN BARRIÈRE DE PARALLAXE SUR UN ÉCRAN

(30) Priorität: 07.06.2007 DE 102007026628
(43) Veröffentlichungstag der Anmeldung: 17.02.2010
(73) Patentinhaber: Wise Vision Holdings Limited, Hong Kong (HK)
(72) Erfinder: OTTE, Stephan, 07745 Jena (DE); MEICHSNER, Jens, 99425 Weimar (DE)
(74) Vertreter: Liedtke, Markus
(86) Internationale Anmeldenummer: PCT/DE2007/002135
(87) Internationale Veröffentlichungsnummer: WO 2008/148364

(56) Entgegenhaltungen:
- US-A1- 2004 008 251
- US-A1- 2004 263 970
- US-A1- 2006 051 109

## Beschreibung

Die Erfindung bezieht sich auf ein Verfahren zur Ausrichtung eines Parallaxenbarriereschirms auf einem Bildschirm.

Seit geraumer Zeit existieren Ansätze zu dem Fachgebiet der Parallaxenbarrieren. Ein Pionier auf diesem Gebiet war Frederic Ives, der in der Schrift GB 190418672 A ein System mit einem "Linienschirm" zur 3D-Darstellung vorstellte. Weiterhin sind in der Schrift von Sam H. Kaplan "Theory of parallax barriers", Journal of SMPTE Vol. 59, No 7, pp 11-21, July 1952 grundlegende Erkenntnisse zur Verwendung von Barriereschirmen für die 3D-Darstellung beschrieben.

Lange Zeit gelang jedoch keine umfassende Verbreitung von autostereoskopischen Systemen. Erst in den 80er Jahren des 20. Jahrhunderts konnte auf Grund der nunmehr zur Verfügung stehenden Rechenleistung und neuartigen Displaytechnologien eine gewisse Renaissance der 3D-Systeme einsetzen. In den 90er Jahren schnellte die Anzahl von Patentanmeldungen und Veröffentlichungen zu brillenfreien 3D-Visualisierungen förmlich in die Höhe. Herausragende Ergebnisse wurden erzielt von den folgenden Erfindern bzw. Anbietern:
In der JP 08331605 AA beschreiben Masutani Takeshi et al. eine Stufenbarriere, bei der ein transparentes Barriereelement in etwa die Abmaße eines Farbsubpixels (R, G oder B) aufweist. Mit dieser Technik war es erstmals möglich, den bei den meisten autostereoskopischen Systemen auf Grund der Darstellung gleichzeitig mehrerer Ansichten (mindestens zwei, bevorzugt mehr als zwei Ansichten) auftretenden Auflösungsverlust in der horizontalen Richtung teilweise auch auf die vertikale Richtung umzulegen. Nachteilig ist hier wie bei allen Barriereverfahren der hohe Lichtverlust. Außerdem verändert sich der Stereokontrast bei seitlicher Bewegung des Betrachters von nahezu 100% auf etwa 50% und dann wieder ansteigend auf 100%, was eine im Betrachtungsraum schwankende 3D-Bildqualität zur Folge hat.

Mit der DE 100 03 326 C2 gelang Armin Grasnick et al. eine Weiterentwicklung der Barrieretechnologie in Bezug auf zweidimensional strukturierte wellenlängenselektive Filterarrays zur Erzeugung eines 3D-Eindrucks. Nachteilig ist jedoch auch hier die gegenüber einem 2D-Display stark verminderte Helligkeit derartiger 3D-Systeme. Schließlich meldeten Wolfgang Tzschoppe et al. die WO 2004/077839 A1 an, welche eine in der Helligkeit verbesserte Barrieretechnologie betrifft. Basierend auf dem Ansatz einer Stufenbarriere der JP 08331605 AA sowie der DE 100 03 326 C2 wird hier ein spezielles Tastverhältnis der transparenten zu den opaken Barrierefilterelementen vorgestellt, welches größer als 1/n mit n der Anzahl der dargestellten Ansichten ist. Die in dieser Schrift offenbarten Ausgestaltungen und Lehren erzeugen jedoch in aller Regel unangenehme Moire-Effekte und/oder eine stark eingeschränkte Tiefenwahrnehmung, da der Stereokontrast - verglichen mit etwa der Lehre der JP 08331605 AA - stark herabgesetzt wird.

In der US 2006/0051109 A1 (Lim et al.) wird die Herstellung eines 3D-Bildschirms beschrieben, bei welcher ein 3D bildgebendes Gerät (z. B. eine Linse oder ein Barriereschirm) vor einem Bildschirm ausgerichtet wird und dann bei korrekter Ausrichtung eine Klebeverbindung ausgehärtet wird. Dabei wird charakteristisch ein schwarzer Strich dargestellt, der von einem Operator oder einer Kamera beobachtet wird. Nachteilig ist hier insbesondere, dass bei der Ausrichtung an Hand lediglich eines schwarzen Striches oder einer schwarzen Fläche nicht notwendigerweise die nötige Korrektheit erreicht wird. Die weiterhin vorgeschlagenen Verfahren, mindestens ein linkes und ein rechtes Bild mit unterschiedlichen Bildinhalten von jeweils einer vollen weißen und einer vollen schwarzen Fläche als Ausrichttestbild zu nutzen, erfordern demgegenüber die Auswertung von zwei disjunkten Teilbildern, nämlich dem linken und dem rechten.

In der DE 102 52 830 B3 (Maly-Motta) wird ein autostereoskopischer Adapter für einen Flachbildschirm beschrieben, welcher eine automatische Kalibrierung über einen elektrooptischen Sensor erfährt. Über die dabei zu verwendenden Testbilder wird allerdings nichts ausgesagt, so dass über die Güte der schlussendlichen Kalibrierung keine Aussage getroffen werden kann.

Der Erfindung liegt die Aufgabe zugrunde, eine Möglichkeit zur Ausrichtung eines Parallaxenbarriereschirms auf einem Bildschirm zur Erzeugung eines Bildschirms zur räumlichen Darstellung mit möglichst einfachen Mitteln anzugeben, so dass eine hinreichend exakte Ausrichtung in kurzer Zeit realisiert wird.

Diese Aufgabe wird erfindungsgemäß gelöst durch ein Verfahren zur Ausrichtung eines Parallaxenbarriereschirms auf einem Bildschirm mit Bildelementen x(i,j) in einem Raster aus Zeilen (i) und Spalten (j) zur Erzeugung eines Bildschirms zur räumlichen Darstellung, umfassend die folgenden Schritte:
- Darbietung eines Testbildes, welches aus verschiedenen Ansichten A(k) mit k = 1,...,n und n = 6 oder n = 7 besteht, auf den Bildelementen x(i,j) mit Zeilen (i) und Spalten (j), wobei das Testbild mindestens zwei erste gerade Linien umfasst, welche zwei voneinander verschiedene Ausdehnungsrichtungen aufweisen und diese Linien in den jeweils n = 6 oder n = 7 Ansichten A(k) an unterschiedlichen horizontalen Positionen angeordnet sind und wobei das Testbild mindestens zwei zweite gerade Linien umfasst, die jeweils parallel zu einer der ersten Linien ausgerichtet sind und die in den jeweils n = 6 oder n = 7 Ansichten A(k) an jeweils zumindest den gleichen horizontalen Positionen angeordnet sind,
- Beobachtung des dargebotenen Testbildes durch den Parallaxenbarriereschirm hindurch aus einem definierten Abstand mittels einer gewöhnlichen zweidimensionalen Kamera,
- Ausrichtung des Parallaxenbarriereschirms vor dem Bildschirm derart, dass im von der Kamera aufgenommenen Abbild des dargebotenen Testbildes jeweils jede erste Linie nahtlos in mindestens eine entsprechend angeordnete zweite Linie übergeht, und dass alle ersten und zweiten Linien im Abbild gerade und ohne Unterbrechung dargestellt sind,
- so dass die Ausrichtung des Parallaxenbarriereschirms zu dem Bildschirm mit Bildelementen x(i,j) hinsichtlich der rotativen Relativposition des Parallaxenbarriereschirms zum Bildschirm mit einer Toleranz von höchstens 3 Bogenminuten genau definiert ist, und
- so dass die Ausrichtung des Parallaxenbarriereschirms zu dem Bildschirm mit Bildelementen x(i,j) hinsichtlich der horizontalen und/oder der vertikalen Relativposition des Parallaxenbarriereschirms zum Bildschirm mit einer Toleranz von höchstens der Breite und/oder Höhe eines Bildelements x(i,j) genau definiert ist.

Die letztgenannte Ausrichtung des Parallaxenbarriereschirms hinsichtlich der horizontalen und/oder vertikalen Relativposition wird in der näher bezeichneten Toleranz selbstredend nur innerhalb wiederkehrender Perioden erreicht, die in der Regel etwa ganzzahlige Vielfache der Breite bzw. Höhe eines Bildelementes x(i,j) sind, wobei das jeweilige ganzzahlige Vielfache durch die horizontale bzw. vertikale Periodizität der in dem Testbild vorhandenen Ansichten bestimmt ist.

Im Übrigen müssen nicht alle ersten Linien paarweise disjunkte Ausdehnungsrichtungen aufweisen, insbesondere wenn es mehr als zwei sind. Es genügt, wenn die gesamte Gruppe von ersten Linien mindestens 2 Ausdehnungsrichtungen aufweist. Durch die parallele Anordnung der zweiten Linien zu den ersten Linien ergibt sich eine äquivalente Aussage für die zweiten Linien.

Der Schritt der Ausrichtung kann prinzipiell von Hand durch einen Operator oder automatisch durch einen Roboter oder ggf. sogar gemischt von einem Operator und einem Roboter durchgeführt werden.

Der Index i adressiert die Zeilen und der Index j die Spalten auf dem Raster aus Bildelementen x(i,j).

Die Anzahl von 6 oder 7 Ansichten im Testbild erlaubt zum einen eine effiziente Testbilderstellung und erzeugt andererseits eine hinreichend gute Testwirkung zur Erzielung der korrekten Ausrichtung.

Die Parameter für den Parallaxenbarriereschirm können beispielweise unter Zuhilfenahme der beiden aus dem eingangs genannten Kaplan-Artikel bekannten Gleichungen (1) und (2) einfach berechnet werden. Damit ergeben sich alle notwendigen Relationen zwischen dem Abstand s, zwischen dem Raster aus Bildelementen x(i,j) und dem Parallaxenbarriereschirm, dem beispielhaft zu 65 mm gesetzten durchschnittlichen Augenabstand beim Menschen, dem Betrachtungsabstand, der (horizontalen) Periodenlänge der transparenten Abschnitte der Barriere sowie die Streifenbreite besagter transparenter Abschnitte. Ebenso geben einige der eingangs genannten Schriften weitere Ausgestaltungshinweise für Parallaxenbarriereschirme, die dem Fachmann hinreichend bekannt sind.

In dem erfindungsgemäßen Verfahren sind nun vorteilhaft genau zwei Ausdehnungsrichtungen der ersten und damit auch der zweiten Linien vorhanden, die jeweils senkrecht zueinander stehen. Weiterhin ist es günstig, wenn die - ohne Beschränkung der Allgemeinheit - erste Ausdehnungsrichtung der ersten Linien in Richtung der Zeilen (i) der Bildelemente x(i,j) und die zweite Ausdehnungsrichtung der ersten Linien in Richtung der Spalten (j) der Bildelemente x(i,j) angeordnet sind. In der Praxis hat es sich bewährt wenigstens eine horizontale erste Linie und mindestens 5 vertikale Linien im Testbild zu nutzen.

Überdies ist es sinnvoll das Testbild so zu gestalten, dass in mindestens einer der n = 6 oder n = 7 Ansichten A(k) jeweils jede erste Linie nahtlos in genau eine zweite Linie übergeht.

Es können darüber hinaus in mindestens einer der n = 6 oder n = 7 Ansichten A(k) vier rechte Winkel enthalten sein, die derart angeordnet sind, dass ein kreuzförmiger Abschnitt gebildet wird. Dann soll nach dem Schritt der Ausrichtung des Parallaxenbarriereschirms vor dem Bildschirm mindestens eine erste Linie der ersten Ausdehnungsrichtung und mindestens eine weitere erste Linie der zweiten Ausdehnungsrichtung im von der Kamera aufgenommenen Abbild des dargebotenen Testbildes innerhalb des durch die vier rechte Winkel gebildeten kreuzförmigen Abschnittes befindlich sein, wobei die Abstände jeweils dieser Linien zu den jeweils nächstbenachbarten beiden rechten Winkeln im Wesentlichen gleich groß sind. Mittels dieser Ausgestaltung wird die Korrektheit der Ausrichtung noch erhöht.

In den meisten Fällen, aber nicht zwingend immer, wird das nach der Ausrichtung von der Kamera aufgenommene Abbild des dargebotenen Testbildes zu mindestens 40% Bildelemente genau einer der n = 6 oder n = 7 Ansichten A(k) beinhalten.

Jeweils alle ersten und jeweils alle zweiten Linien haben vorzugweise die gleiche Farbe, wobei sich die Farbe der ersten und die der zweiten Linien bevorzugt unterscheiden.

Um das erfindungsgemäße Verfahren für den industriellen Einsatz noch günstiger zu gestalten, sind in mindestens einer - bevorzugt in allen - der n = 6 oder n = 7 Ansichten A(k) alphanumerische Zeichen, bevorzugt Modell- bzw. Seriennummern und/oder Identifikationsmarken/-objekte enthalten. Damit wird sichergestellt, dass für ein bestimmtes Bildschirmmodell auch das richtige Testbild verwendet wird, etwa wenn im Bild die Modellnummer zu sehen ist und der Operator bzw. Roboter diese Modellnummer stets mit der des aktuell in Arbeit befindlichen Bildschirms vergleicht. Nach der Ausrichtung des Parallaxenbarriereschirms kann außerdem ein weiterer Schritt der Abspeicherung des von der Kamera aufgenommenen Abbildes des dargebotenen Testbildes durchgeführt werden, wobei bevorzugt eine eindeutige Zuordnung zu dem physischen Bildschirm und/oder dem darauf ausgerichteten Parallaxenbarriereschirm vorgenommen wird, beispielsweise durch die Benennung der abzuspeichernden Bilddatei für das besagte Abbild in Form einer Seriennummer des Bildschirms. Hierdurch kann später zweifelsfrei nachgewiesen werden, dass ein bestimmter Bildschirm durch Anbringung respektive Ausrichtung des Parallaxenbarriereschirms ordnungsgemäß in den 3D-Zustand überführt worden ist.

Fernerhin entsprechen die Bildelemente x(i,j) jeweils einzelnen Farbsubpixeln (R, G oder B) oder Clustern von Farbsubpixeln (z. B. RG, GB oder RGBR oder sonstige) oder Vollfarbpixeln, wobei mit Vollfarbpixeln sowohl weißmischende Gebilde aus RGB-Farbsubpixeln, also RGB-Tripletts, als auch-je nach Bilderzeugungstechnologie - tatsächliche Vollfarbpixel - wie etwa bei Projektionsbildschirmen häufig verbreitet - gemeint sind.

Prinzipiell kann der Parallaxenbarriereschirm nach der Ausrichtung vor dem Bildschirm in einem definierten Abstand s dauerhaft an dem Bildschirm angebracht werden. Hier würde es sich dann um eine permanente Umrüstung handeln. Demgegenüber ist es aber auch möglich, dass der Parallaxenbarriereschirm nach dem Schritt der Ausrichtung nicht an dem Bildschirm angebracht wird, sondern dass in einem weiteren Schritt auf dem Parallaxenbarriereschirm und/oder auf dem Bildschirm Markierungen angebracht werden, welche eine spätere ausgerichtete Anbringung des Parallaxenbarriereschirm an dem Bildschirm gestatten, ohne zu diesem späteren Zeitpunkt das gesamte erfindungsgemäße Verfahren wiederholen zu müssen.

Der Bildschirm kann bevorzugt ein Farb-LCD-Bildschirm, ein Plasma-Display, ein Projektionsschirm, ein LED-basierter Bildschirm, ein OLED-basierter Bildschirm, ein SED-Bildschirm oder ein VFD-Bildschirm sein.

Der Parallaxenbarriereschirm umfaßt unter einem Winkel a gegenüber der Vertikalen geneigte, transparente und opake Abschnitte. Er besteht aus einem Glassubstrat, auf welches an der Rückseite die Barrierestruktur aufgebracht ist.

Die Barrierestruktur kann zum einen ein belichteter und entwickelter fotografischer Film sein, der rückseitig auf das Glassubstrat auflaminiert ist, wobei bevorzugt die Emulsionsschicht des fotografisches Films nicht zum Glassubstrat zeigt.

Alternativ können die opaken Bereiche der Barrierestruktur durch auf das Glassubstrat aufgedruckte Farbe gebildet werden. Die transparenten Bereiche entstehen dabei einfach durch das Weglassen der Farbe auf den entsprechenden Bereichen.

Weitere Herstellungsverfahren sind im Stand der Technik bekannt und bedürfen hier keiner weiteren Erläuterung.

Bei dem erfindungsgemäßen Verfahren erfolgt die Anordnung der Bildteilinformationen verschiedener Ansichten A(k) im dargebotenen Testbild auf dem Raster aus Bildelementen x(i,j) vorteilhaft in einem zweidimensionalen periodischen Muster, wobei die Periodenlänge in der horizontalen und der vertikalen Richtung bevorzugt nicht mehr als jeweils 32 Bildelemente x(i,j) umfasst. Ausnahmen von dieser Obergrenze von jeweils 32 Bildelementen x(i,j) sind zulässig.

Regelhaft sollte der Winkel, welcher die besagte horizontale und vertikale Periodenlänge des besagten zweidimensionalen periodischen Musters als Gegen- und Ankathete aufspannt, im Wesentlichen dem Neigungswinkel a der transparenten Abschnitte auf dem Parallaxenbarriereschirm gegenüber der Vertikalen entsprechen.

Vorteilhaft enthält der Parallaxenbarriereschirm Mittel zur Verminderung von Störlichtreflexen, bevorzugt mindestens eine interferenzoptische Entspiegelungsschicht.

Bei der späteren 3D-Darstellung auf dem Bildschirm mit dem ausgerichteten Parallaxenbarriereschirm entsprechen die Ansichten A(k) jeweils verschiedenen Perspektiven einer Szene oder eines Gegenstandes, wie bei verschiedenen anderen 3D-Wiedergabeverfahren auch.

Die Erfindung soll nachstehend anhand von Ausführungsbeispielen näher erläutert werden. Die Zeichnungen zeigen:
- Fig. 1: den schematischen Aufbau zur Umsetzung des erfindungsgemäßen Verfahrens,
- Fig. 2: eine beispielhafte Barrierestruktur eines Parallaxenbarriereschirms zur Verwendung im erfindungsgemäßen Verfahren,
- Fig.3: eine beispielhafte Bildkombination der Bildteilinformationen verschiedener Ansichten im Testbild,
- Fig. 4 - Fig.6: Sichtbeispiele für einzelne Ansichten A(k), deren Bildteilinformationen im dargebotenen Testbild zur Darstellung gelangen,
- Fig. 7: ein Schema zur Bemaßung eines Parallaxenbarriereschirmes.

Sämtliche Zeichnungen sind nicht maßstäblich. Dies betrifft insbesondere auch Winkelmaße.

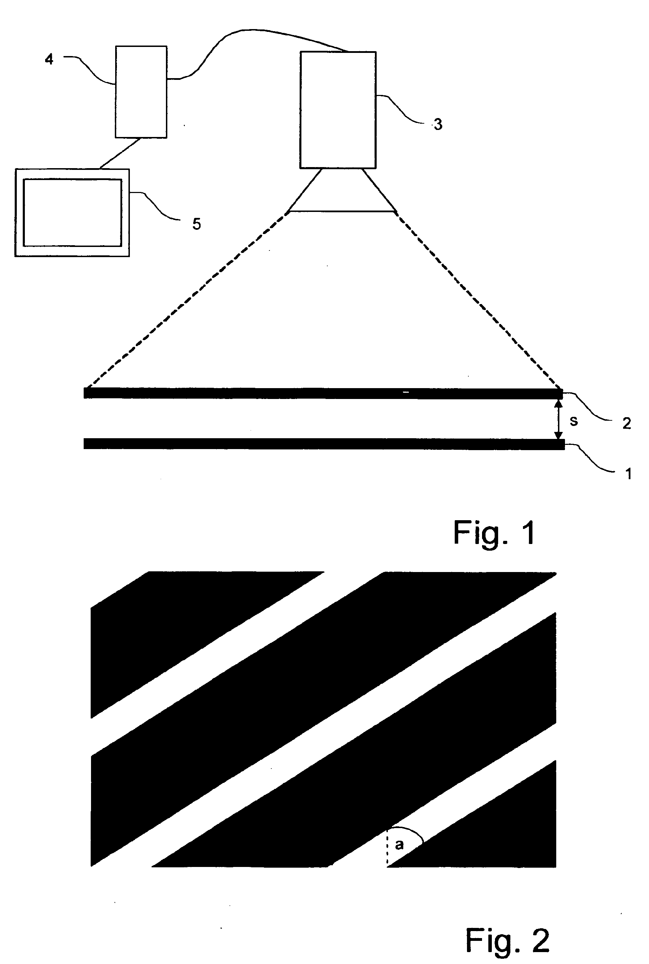

Die Fig. 1 zeigt den schematischen Aufbau zur Umsetzung des erfindungsgemäßen Verfahrens. Dabei wird der Parallaxenbarriereschirm 2 auf einem Bildschirm 1 mit Bildelementen x(i,j) in einem Raster aus Zeilen (i) und Spalten (j) im Abstand s ausgerichtet, wodurch ein Bildschirm zur räumlichen Darstellung entsteht. Weiterhin zu sehen ist eine (im Allgemeinen zweidimensionale) Kamera 3, deren Ausgangssignal hier beispielhaft mittels einer Frame-Grabber-Karte in einen PC 4 eingespeist wird, der dieses Signal umwandelt und wiederum auf einem Kontrollmonitor 5 anzeigt.

Erfindungsgemäß werden die folgenden Schritte ausgeführt:
- Darbietung eines Testbildes, welches aus verschiedenen Ansichten A(k) mit k = 1,...,n und n = 6 besteht, auf den Bildelementen x(i,j) mit Zeilen (i) und Spalten (j), wobei das Testbild mindestens zwei erste gerade Linien umfasst, welche zwei voneinander verschiedene Ausdehnungsrichtungen aufweisen und diese Linien in den jeweils n = 6 oder n = 7 Ansichten A(k) an unterschiedlichen horizontalen Positionen angeordnet sind und wobei das Testbild mindestens zwei zweite gerade Linien umfasst, die jeweils parallel zu einer der ersten Linien ausgerichtet sind und die in den jeweils n = 6 oder n = 7 Ansichten A(k) an jeweils zumindest den gleichen horizontalen Positionen angeordnet sind,
- Beobachtung des dargebotenen Testbildes durch den Parallaxenbarriereschirm 2 hindurch aus einem definierten Abstand mittels einer zweidimensionalen Kamera 3,
- Ausrichtung des Parallaxenbarriereschirms 2 vor dem Bildschirm 1 derart, dass im von der Kamera 3 aufgenommenen Abbild des dargebotenen

Testbildes jeweils jede erste Linie nahtlos in mindestens eine entsprechend angeordnete zweite Linie übergeht, und dass alle ersten und zweiten Linien im Abbild gerade und ohne Unterbrechung dargestellt sind,
- so dass die Ausrichtung des Parallaxenbarriereschirms 2 zu dem Bildschirm 1 mit Bildelementen x(i,j) hinsichtlich der rotativen Relativposition des Parallaxenbarriereschirms 2 zum Bildschirm 1 mit einer Toleranz von höchstens 3 Bogenminuten genau definiert ist, und
- so dass die Ausrichtung des Parallaxenbarriereschirms 2 zu dem Bildschirm 1 mit Bildelementen x(i,j) hinsichtlich der horizontalen und/oder der vertikalen Relativposition des Parallaxenbarriereschirms 2 zum Bildschirm 1 mit einer Toleranz von höchstens der Breite und/oder Höhe eines Bildelements x(i,j) genau definiert ist.

Der Schritt der Ausrichtung wird beispielsweise von Hand durch einen Operator durchgeführt.

Die Kamera 3 ist bevorzugt in einem Abstand vor dem Parallaxenbarriereschirm 2 angeordnet, welcher einem ausgewählten 3D-Betrachtungsabstand vor dem Bildschirm 1 entspricht. Dieser wird - wie dem Fachmann bekannt ist - regelhaft durch den Abstand s zwischen Bildschirm 1 und Parallaxenbarriereschirm 2 in Verbindung mit weiteren Parametern, die beispielsweise in der eingangs genannten Schrift von Kaplan aufgezählt sind, festgelegt. Bevorzugt ist die Kamera 3 dabei optisch senkrecht vor dem Flächenmittelpunkt des Bildschirms 1 positioniert.

In Fig. 2 ist eine beispielhafte Barrierestruktur eines Parallaxenbarriereschirms 2 zur Verwendung im erfindungsgemäßen Verfahren dargestellt. Der Parallaxenbarriereschirm 2 umfasst unter einem Winkel a gegenüber der Vertikalen geneigte, transparente und opake Abschnitte. Er besteht aus einem Glassubstrat, auf welches an der Rückseite die Barrierestruktur aufgebracht ist. Andere Ausgestaltungen sind möglich, wie etwa Substrate, die nicht aus Glas bestehen (z. B. aus Kunststoff).

Die Barrierestruktur ist hier zum Beispiel ein belichteter und entwickelter fotografischer Film, der rückseitig auf das Glassubstrat auflaminiert ist, wobei bevorzugt die Emulsionsschicht des fotografisches Films nicht zum Glassubstrat zeigt.

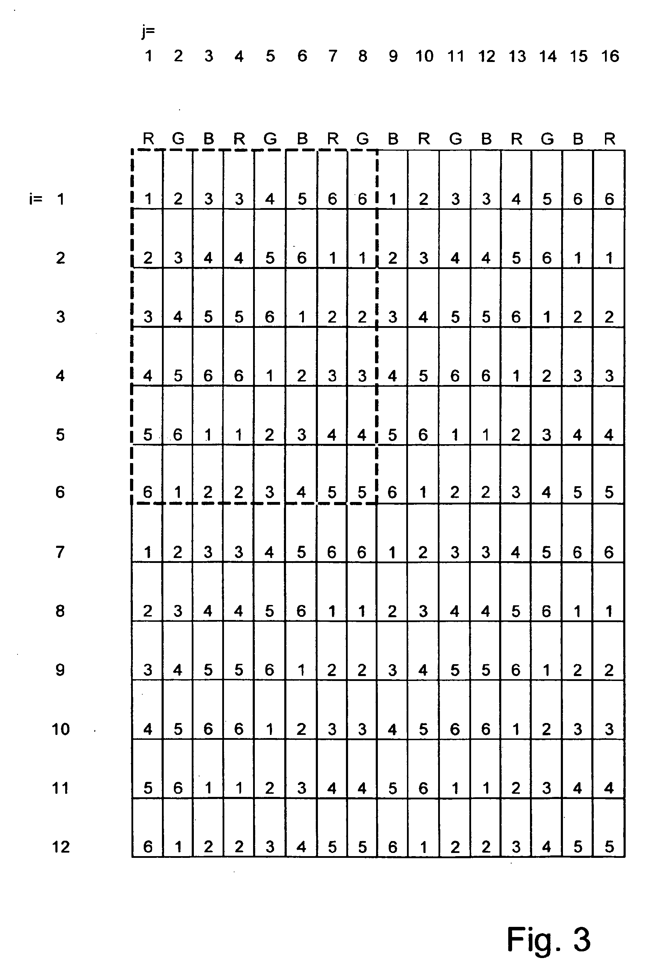

Ferner gibt Fig. 3 eine beispielhafte Bildkombination der Bildteilinformationen verschiedener Ansichten im Testbild wieder, welche auf den Bildelementen x(i,j) dargestellt wird. Bei dem erfindungsgemäßen Verfahren erfolgt die Anordnung der Bildteilinformationen verschiedener Ansichten A(k) im dargebotenen Testbild auf dem Raster aus Bildelementen x(i,j) vorteilhaft in einem zweidimensionalen periodischen Muster.

Regelhaft sollte der Winkel, welcher die besagte horizontale und vertikale Periodenlänge des besagten zweidimensionalen periodischen Musters als Gegen- und Ankathete aufspannt, im Wesentlichen dem Neigungswinkel a der transparenten Abschnitte auf dem Parallaxenbarriereschirm 2 gegenüber der Vertikalen entsprechen. Vorteilhaft enthält der Parallaxenbarriereschirm 2 Mittel zur Verminderung von Störlichtreflexen, bevorzugt mindestens eine interferenzoptische Entspiegelungsschicht.

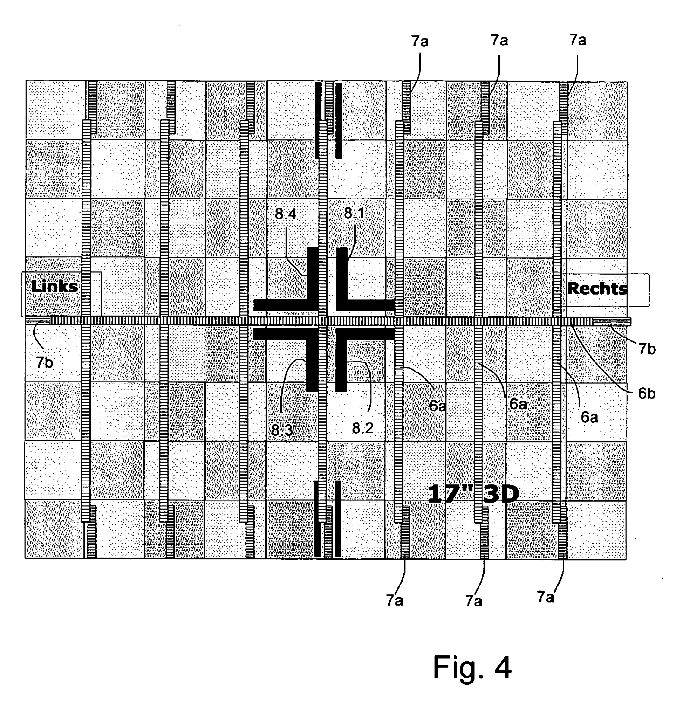

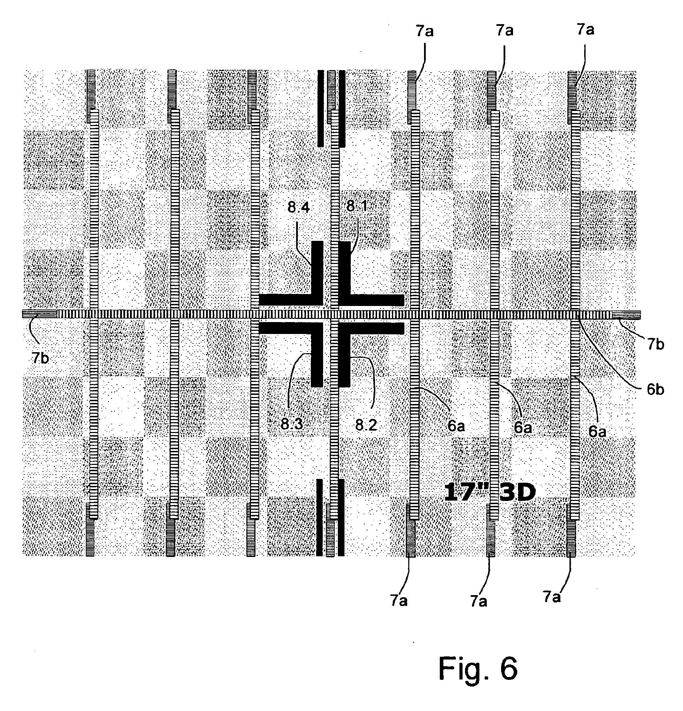

Weiterhin zeigen die Fig. 4 bis Fig. 6 Sichtbeispiele für einzelne Ansichten A(k) mit k = 1, k = 3 und k = 5, deren Bildteilinformationen im dargebotenen Testbild zur Darstellung gelangen.

Zu erkennen sind mindestens zwei erste gerade Linien 6a, 6b, welche zwei voneinander verschiedene Ausdehnungsrichtungen aufweisen. Diese Linien sind in den jeweils n = 6 Ansichten A(k) an unterschiedlichen horizontalen Positionen angeordnet. Das Testbild umfasst ferner mindestens zwei zweite gerade Linien 7a, 7b, die jeweils parallel zu einer der ersten Linien 6a, 6b ausgerichtet sind und die in den jeweils n = 6 Ansichten A(k) an jeweils zumindest den gleichen horizontalen Positionen angeordnet sind.

Die ersten Linen 6a und 6b sind dabei vorteilhaft, wie aus den Figuren 4 bis 6 ersichtlich, jeweils senkrecht zueinander angeordnet. Weiterhin ist es günstig, wenn die - ohne Beschränkung der Allgemeinheit - ersten Linien 6b in Richtung der Zeilen (i) der Bildelemente x(i,j) und die ersten Linien 6a in Richtung der Spalten (j) der Bildelemente x(i,j) angeordnet sind. In der Praxis hat es sich bewährt, wenigstens eine horizontale erste Linie 6b und mindestens 5 vertikale erste Linien 6a im Testbild zu nutzen.

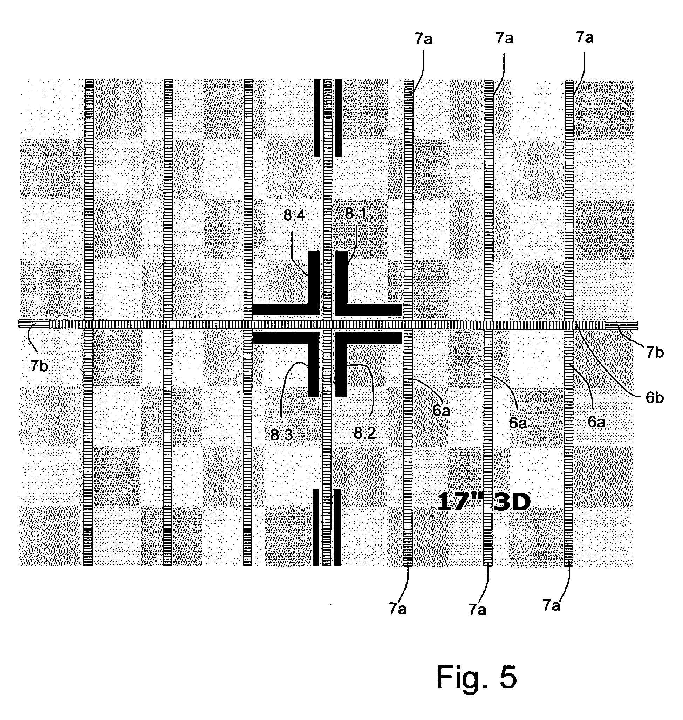

Überdies ist es sinnvoll das Testbild so zu gestalten, dass in mindestens einer der n = 6 Ansichten A(k) jeweils jede erste Linie 6a, 6b nahtlos in genau eine oder maximal zwei zweite Linien 7a, 7b übergeht, hier entsprechend Fig. 5.

Für den Fall, dass der Parallaxenbarrierebildschirm 2 korrekt vor dem Bildschirm 1 ausgerichtet ist, sollte das von der Kamera 3 aufgenommene Abbild des dargebotenen Testbildes in etwa so aussehen, wie die Ansicht k = 3 in Fig. 5. Bei nicht korrekter Ausrichtung hinsichtlich der rotativen Relativposition des Parallaxenbarriereschirms 2 zum Bildschirm 1 zeigen insbesondere die ersten Linien 6a, 6b kein gerades Erscheinungsbild, sondern erscheinen vielmehr unterbrochen oder mit gezackten Rändern. Dies wäre ein Zeichen für die Fortsetzung der Ausrichtung durch weitere rotative Änderung der besagten Relativposition.

Bei nicht korrekter Ausrichtung hinsichtlich der horizontalen und/oder der vertikalen Relativposition des Parallaxenbarriereschirms 2 zum Bildschirm 1 gehen auf keinen Fall alle ersten Linien 6a, 6b nahtlos in die entsprechenden zweiten Linien 7a, 7b über. Dies wäre ein Zeichen, den Parallaxenbarriereschirm 2 horizontal und/oder vertikal vor dem Bildschirm 1 zu bewegen, um schließlich zu einer korrekten Position zu gelangen.

Wie aus Fig. 4 bis Fig. 6 ersichtlich sind darüber hinaus in allen der n = 6 Ansichten A(k) vier rechte Winkel 8.1, 8.2, 8.3 und 8.4 enthalten, die durch ihre Anordnung einen kreuzförmigen Abschnitt bilden. Nach dem Schritt der Ausrichtung des Parallaxenbarriereschirms 2 vor dem Bildschirm 1 sollen mindestens zwei erste Linien 6a, 6b im von der Kamera 3 aufgenommenen Abbild des dargebotenen Testbildes innerhalb des gebildeten kreuzförmigen Abschnittes befindlich sein, wobei die Abstände jeweils aller ersten Linien 6a, 6b zu den jeweils nächstbenachbarten beiden rechten Winkeln (z. B. rechter Winkel 8.1 zu rechter Winkel 8.2 bzw. zu rechter Winkel 8.4) im Wesentlichen gleich groß sind. Mittels dieser Ausgestaltung wird die Korrektheit der Ausrichtung des Parallaxenbarriereschirms 2 vor dem Bildschirm 1 noch erhöht.

Jeweils alle ersten und jeweils alle zweiten Linien 6a, 6b, 7a, 7b haben vorzugweise die gleiche Farbe, wobei sich die Farbe der ersten Linien 6a, 6b und die der zweiten Linien 7a, 7b bevorzugt unterscheiden. In den Zeichnungen Fig. 4 bis Fig. 6 sind die Farben durch unterschiedliche Muster angedeutet.

Um das erfindungsgemäße Verfahren für den industriellen Einsatz noch günstiger zu gestalten, sind in mindestens einer - bevorzugt in allen - der n = 6 Ansichten A(k) alphanumerische Zeichen, bevorzugt Modell- bzw. Seriennummern, und/oder Identifikationsmarken/-objekte enthalten. Damit wird sichergestellt, dass für ein bestimmtes Bildschirmmodell auch das richtige Testbild verwendet wird. In den Figuren 4 bis 6 ist z. B. der Schriftzug "17" 3D" zu sehen.

Nach der Ausrichtung des Parallaxenbarriereschirms 2 kann außerdem ein weiterer Schritt der Abspeicherung des von der Kamera 3 aufgenommenen Abbildes des dargebotenen Testbildes durchgeführt werden, wobei bevorzugt eine eindeutige Zuordnung zu dem physischen Bildschirm 1 und/oder dem darauf ausgerichteten Parallaxenbarriereschirm 2 vorgenommen wird, beispielsweise durch die Benennung der abzuspeichernden Bilddatei für das besagte Abbild in Form einer Seriennummer des Bildschirms 1.

In dem Ausgestaltungsbeispiel wird der Parallaxenbarriereschirm 2 mittels eines Abstandshalters zur Wahrung des weiter oben definierten Abstandes s dauerhaft an dem Bildschirm 1 angebracht, beispielsweise angeklebt oder angeschraubt.

Der Bildschirm 1 kann bevorzugt ein Farb-LCD-Bildschirm sein.

Bei der späteren 3D-Darstellung auf dem Bildschirm 1 mit dem ausgerichteten Parallaxenbarriereschirm 2 entsprechen die Ansichten A(k) jeweils verschiedenen Perspektiven einer Szene oder eines Gegenstandes, wie bei verschiedenen anderen 3D-Wiedergabeverfahren auch.

Zur weiteren Illustration möglicher Umsetzungen des erfindungsgemäßen Verfahrens werden im Folgenden weitere beispielhafte Details und Parameter benannt.

Als Bildschirm 1 kommt in einer ersten Ausgestaltung ein eine Bilddiagonale von etwa 40" messender LCD-Bildschirm vom Typ NEC LCD4010 zur Anwendung, ausgestattet mit Farbsubpixeln R, G, B als Bildelemente x(i,j) in einem Raster (i,j) mit einer Auflösung von Zeilen i = 1,...,768 und Spalten j = 1,...,1360*3 = 4080, wobei auf den Bildelementen x(i,j) Bildteilinformationen verschiedener Ansichten A(k) mit k = 1,...,n und n = 6 sichtbar gemacht werden können, also auch ein entsprechendes Testbild mit den weiter oben beschriebenen Eigenschaften. Die Farbsubpixel (R; G, B) entsprechen bekanntlich in dem Beispiel den Bildelementen x(i,j), wobei deren Höhe jeweils etwa 0,648 mm und deren Breite etwa 0,216 mm beträgt.

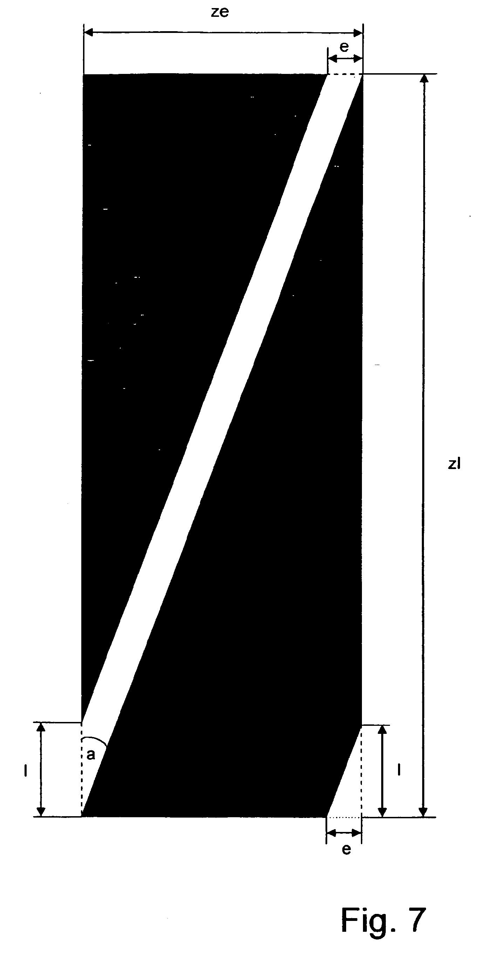

Gemäß der Bemaßung in Fig. 7 stehen die transparenten Abschnitte des Parallaxenbarriereschirms 2 gegenüber der Vertikalen unter einem Neigungswinkel a = 23,96248897°. Die Breite e der besagten Abschnitte in horizontaler Richtung des Rasters mit den Bildelementen x(i,j) beträgt 0,4305692 mm und ihre Höhe I beträgt 0,968781 mm. Die horizontale Periode ze beträgt 1,7222768 mm und die vertikale Periode zl der transparenten Abschnitte beträgt 3,875124 mm.

In einer zweiten Ausführung kommt an Stelle des 40"-LCD-Bildschirms ein 32"-LCD-Bildschirm vom Typ NEC LCD3210 zur Anwendung.

Auch hier werden die Farbsubpixel (R, G, B) als Bildelemente x(i,j) eingesetzt. Dabei ist ebenfalls eine Auflösung von Zeilen i = 1,...,768 und Spalten j = 1,...,1360*3 = 4080 vorgesehen, wobei die Höhe der Bildelemente x(i,j) etwa 0,511 mm und die Breite etwa 0,17033 mm beträgt, die Bildteilinformationen verschiedener Ansichten A(k) des Testbildes gemäß Fig. 3 angeordnet sind, der Neigungswinkel a der transparenten Abschnitte des Parallaxenbarriereschirms 2 gegenüber der Vertikalen 23,96248897° ist und die Breite e der besagten Abschnitte in horizontaler Richtung des Rasters mit den Bildelementen x(i,j) jeweils 0,339776 mm und ihre Höhe I 0,764496 mm beträgt.

Die horizontale Periode ze beträgt 1,359104 mm und die vertikale Periode zl der transparenten Abschnitte beträgt 3,057984 mm (vergleiche Fig. 7).

Zu bemerken ist noch, dass die LCD Bildschirme NEC LCD3210 und NEC LCD4010 zwar nativ über 1366*3 Bildelemente in der Horizontalen verfügen, für die pixelgenaue Ansteuerung jedoch in der Regel nur 1360*3 = 4080 horizontale Bildelemente, d. h. Farbsubpixel R, G, B verwendet werden können.

In einem dritten Ausführungsbeispiel kommt ein 17°-LCD-Bildschirm vom Typ BenQ FP72E zur Anwendung.

Auch hier werden die Farbsubpixel (R, G, B) als Bildelemente x(i,j) eingesetzt. Dabei ist ebenfalls eine Auflösung von Zeilen i = 1,...,1024 und Spalten j = 1,...,1280*3 = 3840 vorgesehen, wobei die Höhe der Bildelemente x(i,j) etwa 0,264 mm und die Breite etwa 0,088 mm beträgt, die Bildteilinformationen verschiedener Ansichten A(k) des Testbildes gemäß Fig. 3 angeordnet sind, der Neigungswinkel a der transparenten Abschnitte des Parallaxenbarriereschirms 2 gegenüber der Vertikalen 23,96248897° ist und die Breite e der besagten Abschnitte in horizontaler Richtung des Rasters mit den Bildelementen x(i,j) jeweils 0,175762 mm und ihre Höhe I 0,3954645 mm beträgt.

Die horizontale Periode ze beträgt 0,703048 mm und die vertikale Periode zl der transparenten Abschnitte beträgt 1,581858 mm (siehe Fig. 7).

Die Vorteile der Erfindung sind vielseitig. Insbesondere erlaubt das erfindungsgemäße Verfahren die Ausrichtung eines Parallaxenbarriereschirms auf einem Bildschirm zur Erzeugung eines Bildschirms zur räumlichen Darstellung in verhältnismäßig kurzer Zeit und bei großer Exaktheit. Es ist fernerhin mittels entsprechender Testbilder für verschieden große Bildschirme anwendbar, insofern also sehr flexibel. Überdies kann die besagte Ausrichtung manuell, automatisch oder semiautomatisch umgesetzt werden.

Die Erfindung kann mit einfachen und handelsüblichen Mitteln realisiert werden.

## Patentansprüche

1. Verfahren zur Ausrichtung eines Parallaxenbarriereschirms (2) auf einem Bildschirm (1) mit Bildelementen x(i,j) in einem Raster aus Zeilen (i) und Spalten (j) zur Erzeugung eines Bildschirms zur räumlichen Darstellung, umfassend die folgenden Schritte:
- Darbietung eines Testbildes, welches aus verschiedenen Ansichten A(k) mit k = 1,...,n und n = 6 oder n = 7 besteht, auf den Bildelementen x(i,j) mit Zeilen (i) und Spalten (j), wobei das Testbild mindestens zwei erste gerade Linien (6a, 6b) umfasst, welche zwei voneinander verschiedene Ausdehnungsrichtungen aufweisen und diese Linien (6a, 6b) in den jeweils n = 6 oder n = 7 Ansichten A(k) an unterschiedlichen horizontalen Positionen angeordnet sind und wobei das Testbild mindestens zwei zweite gerade Linien (7a, 7b) umfaßt, die jeweils parallel zu einer der ersten Linien (6a, 6b) ausgerichtet sind und die in den jeweils n=6 oder n=7 Ansichten A(k) an jeweils zumindest den gleichen horizontalen Positionen angeordnet sind,
- Beobachtung des dargebotenen Testbildes durch den Parallaxenbarriereschirm (2) hindurch aus einem definierten Abstand mittels einer zweidimensionalen Kamera (3),
- Ausrichtung des Parallaxenbarriereschirms (2) vor dem Bildschirm (1) derart, dass im von der Kamera (3) aufgenommenen Abbild des dargebotenen Testbildes jeweils jede erste Linie (6a, 6b) nahtlos in mindestens eine entsprechend angeordnete zweite Linie (7a, 7b) übergeht, und dass alle ersten und zweiten Linien (6a, 6b, 7a, 7b) im Abbild gerade und ohne Unterbrechung dargestellt sind,
- so dass die Ausrichtung des Parallaxenbarriereschirms (2) zu dem Bildschirm (1) mit Bildelementen x(i,j) hinsichtlich der rotativen Relativposition des Parallaxenbarriereschirms (2) zum Bildschirm (1) mit einer Toleranz von höchstens 3 Bogenminuten genau definiert ist, und
- so dass die Ausrichtung des Parallaxenbarriereschirms (2) zu dem Bildschirm (1) mit Bildelementen x(i,j) hinsichtlich der horizontalen und/oder der vertikalen Relativposition des Parallaxenbarriereschirms (2) zum Bildschirm (1) mit einer Toleranz von höchstens der Breite und/oder Höhe eines Bildelements x(i,j) genau definiert ist.

2. Verfahren nach Anspruch 1, **dadurch gekennzeichnet,**
**dass** die mindestens zwei ersten Linen (6a, 6b) jeweils senkrecht zueinander angeordnet sind.

3. Verfahren nach Anspruch 1 oder 2, **dadurch gekennzeichnet,**
**dass** wenigstens eine erste Linie (6b) in Richtung der Zeilen (i) der Bildelemente x(i,j) angeordnet ist und wenigstens eine weitere erste Linie (6a) in Richtung der Spalten (j) der Bildelemente x(i,j) angeordnet ist.

4. Verfahren nach einem der vorgenannten Ansprüche, **dadurch gekennzeichnet, dass** in mindestens einer der n = 6 oder n = 7 Ansichten A(k) jeweils jede erste Linie (6a, 6b) nahtlos in genau oder maximal zwei zweite Linien (7a, 7b) übergeht.

5. Verfahren nach Anspruch 2 oder 3, **dadurch gekennzeichnet, dass** in mindestens einer der n = 6 oder n = 7 Ansichten A(k) vier rechte Winkel enthalten sind, die durch ihre Anordnung einen kreuzförmigen Abschnitt bilden, und dass nach dem Schritt der Ausrichtung des Parallaxenbarriereschirms (2) vor dem Bildschirm (1) mindestens zwei erste Linien (6a, 6b) im von der Kamera (3) aufgenommenen Abbild des dargebotenen Testbildes innerhalb des von den rechten Winkeln gebildeten kreuzförmigen Abschnittes befindlich sind, wobei die ersten Linien (6a, 6b) zu den jeweils angrenzenden Schenkeln der rechten Winkel im Wesentlichen parallel verlaufen und den gleichen Abstand aufweisen.

6. Verfahren nach einem der vorgenannten Ansprüche, **dadurch gekennzeichnet, dass** jeweils alle ersten Linien (6a, 6b) und jeweils alle zweiten Linien (7a, 7b) mit der gleichen Farbe versehen werden, wobei sich die Farbe der ersten Linien (6a, 6b) und die der zweiten Linien (7a, 7b) bevorzugt unterscheidet.

7. Verfahren nach einem der vorgenannten Ansprüche, **dadurch gekennzeichnet, dass** die Bildelemente x(i,j) Farbsubpixeln (R, G oder B) oder Clustern von Farbsubpixeln (z. B. RG oder GB) oder Vollfarbpixeln entsprechen.

8. Verfahren nach einem der vorgenannten Ansprüche, **dadurch gekennzeichnet, dass** der Parallaxenbarriereschirm (2) nach der Ausrichtung vor dem Bildschirm (1) in einem definierten Abstand (s) dauerhaft an dem Bildschirm (1) angebracht wird.

9. Verfahren nach einem der vorgenannten Ansprüche, **dadurch gekennzeichnet, dass** als Bildschirm (1) ein Farb-LCD-Bildschirm, ein Plasma-Display, ein Projektionsschirm, ein LED-basierter Bildschirm, ein OLED-basierter Bildschirm, ein SED-Bildschirm oder ein VFD-Bildschirm verwendet wird.

10. Verfahren nach einem der vorgenannten Ansprüche, **dadurch gekennzeichnet, dass** der Parallaxenbarriereschirm (2) unter einem Winkel (a) gegenüber der Vertikalen geneigte, transparente und opake Abschnitte umfasst.

11. Verfahren nach einem der vorgenannten Ansprüche, **dadurch gekennzeichnet, dass** der Parallaxenbarriereschirm (2) aus einem Glassubstrat besteht, auf welches an der Rückseite die Barrierestruktur aufgebracht wird.

12. Verfahren nach Anspruch 11, **dadurch gekennzeichnet, dass** die Barrierestruktur ein belichteter und entwickelter fotografischer Film ist, der rückseitig auf das Glassubstrat auflaminiert ist, wobei bevorzugt die Emulsionsschicht des fotografischen Films nicht zum Glassubstrat zeigt.

13. Verfahren nach Anspruch 11, **dadurch gekennzeichnet, dass** die opaken Bereiche der Barrierestruktur durch auf das Glassubstrat aufgedruckte Farbe gebildet werden.

14. Verfahren nach einem der vorgenannten Ansprüche, **dadurch gekennzeichnet, dass** der Parallaxenbarriereschirm (2) Mittel zur Verminderung von Störlichtreflexen, bevorzugt mindestens eine interferenzoptische Entspiegelungsschicht, enthält.

## Claims

1. A method for the orientation of a parallax barrier screen (2) on a display screen (1) with pixels x(i, j) in a pattern of rows (i) and columns (j) to produce a display screen for three-dimensional representation, comprising the following steps:
- presentation of a test image, which consists of different views A(k) with k=1, ..., n and n=6 or n=7, on the pixels x(i,j) with rows (i) and columns (j), whereas the test image comprises at least two first straight lines (6a, 6b) having two directions of extension different from one another and whereas these lines (6a, 6b) are arranged at different horizontal positions in the respective views A(k) with n=6 or n=7 and whereas the test image comprises at least two second straight lines (7a, 7b), which are each oriented parallel to one of the first lines (6a, 6b) and which are each arranged at, at least the same, horizontal positions in the views A(k) with n=6 or n=7,
- observation of the presented test image through the parallax barrier screen (2) from a defined distance by means of a two-dimensional camera (3),
- orientation of the parallax barrier screen (2) in front of the display screen (1) in such a manner that in the image of the presented test image, the image taken by the camera (3), in each case each first line (6a, 6b) merges seamlessly into at least one second line (7a, 7b) arranged correspondingly, and that all first and second lines (6a, 6b, 7a, 7b) are shown straight and continuous in the image,
- so that the orientation of the parallax barrier screen (2) to the display screen (1) with pixels x(i,j) is defined precisely with a tolerance of at most 3 arc minutes with respect to the rotary relative position of the parallax barrier screen (2) to the display screen (1) and
- so that the orientation of the parallax barrier screen (2) to the display screen (1) with pixels x(i,j) is defined precisely with a tolerance of at most the width and/or height of a pixel x(i,j) with respect to the horizontal and/or vertical relative position of the parallax barrier screen (2) to the display screen (1).

2. The method according to claim 1, **characterized in that** the at least two first lines (6a, 6b) are each arranged perpendicular to one another.

3. The method according to claim 1 or 2, **characterized in that** at least one first line (6b) is arranged in the direction of the rows (i) of the pixels x(i,j) and at least one other first line (6a) is arranged in the direction of the columns (j) of the pixels x(i,j).

4. The method according to one of the preceding claims, **characterized in that** in each case each first line (6a, 6b) merges seamlessly into precisely or a maximum of two second lines (7a, 7b) in at least one of the views A(k) with n=6 or n=7.

5. The method according to claim 2 or 3, **characterized in that** there are four right angles in at least one of the views A(k) with n=6 or n=7 which form a cross-shaped section by their arrangement and that, after the step of the orientation of the parallax barrier screen (2) in front of the display screen (1), there are at least two first lines (6a, 6b) in the image of the presented test image, the image taken by the camera (3), within the cross-shaped section formed by the right angles, whereas the first lines (6a, 6b) are substantially parallel to the respective adjacent sides of the right angles and have the same distance.

6. The method according to one of the preceding claims, **characterized in that** in each case all first lines (6a, 6b) and all second lines (7a, 7b) are provided with the same colour, whereas the colour of the first lines (6a, 6b) and that of the second lines (7a, 7b) is preferably different.

7. The method according to one of the preceding claims, **characterized in that** the pixels x(i,j) correspond to colour subpixels (R, G or B) or clusters of colour subpixels (e.g., RG or GB) or full colour pixels.

8. The method according to one of the preceding claims, **characterized in that** the parallax barrier screen (2) is permanently attached to the display screen (1) at a defined distance (s) after the orientation in front of the display screen (1).

9. The method according to one of the preceding claims, **characterized in that** a colour LCD screen, a plasma display, a projection screen, an LED-based display, an OLED-based display, an SED display, or a VFD display is used as display screen (1).

10. The method according to one of the preceding claims, **characterized in that** the parallax barrier screen (2) comprises transparent and opaque sections inclined under an angle (a) relative to the vertical.

11. The method according to one of the preceding claims, **characterized in that** the parallax barrier screen (2) consists of a glass substrate, to the back of which the barrier structure is applied.

12. The method according to claim 11, **characterized in that** the barrier structure is an exposed and developed photographic film, which is laminated to the glass substrate on the back, whereas the emulsion layer of the photographic film does preferably not point to the glass substrate.

13. The method according to claim 11, **characterized in that** the opaque areas of the barrier structure are formed by colour printed on the glass substrate.

14. The method according to one of the preceding claims, **characterized in that** the parallax barrier screen (2) contains means to reduce spurious light reflections, preferably at least one interference optical antireflection coating.

## Revendications

1. Procédé pour l'alignement d'un écran barrière de parallaxe (2) sur un écran (1) comportant des éléments d'image x(i,j) dans une trame constituée de lignes (i) et de colonnes (j), afin d'obtenir un écran de représentation spatiale, comprenant les étapes suivantes :
- affichage d'une mire composée de différentes vues A(k) avec k = 1,...,n et n = 6 ou n = 7, sur les éléments d'image x(i,j) avec des lignes (i) et des colonnes (j), la mire comprenant au moins deux premières lignes droites (6a, 6b) qui présentent deux directions d'extension différentes, lesdites lignes (6a, 6b) étant situées sur différentes positions horizontales dans les vues A(k) avec n = 6 ou n = 7, et la mire comprenant au moins deux deuxièmes lignes droites (7a, 7b) orientées parallèlement à une des premières lignes (6a, 6b), et situées sur au moins les mêmes positions horizontales dans les vues A(k) avec n=6 ou n=7,
- observation de la mire affichée au travers de l'écran barrière de parallaxe (2) au moyen d'une caméra bidimensionnelle (3) à une distance définie,
- alignement de l'écran barrière de parallaxe (2) devant l'écran (1), de telle manière que, dans l'image de la mire affichée capturée par la caméra (3), chaque première ligne (6a, 6b) se prolonge sans joint par au moins une deuxième ligne (7a, 7b) disposée en correspondance, et que toutes les premières et les deuxièmes lignes (6a, 6b, 7a, 7b) soient affichées de manière droite et ininterrompue dans l'image,
- de manière à définir précisément, avec une tolérance de 3 minutes d'arc au maximum, l'alignement de l'écran barrière de parallaxe (2) par rapport à l'écran (1) avec des éléments d'image x(i,j), relativement à la position de rotation relative de l'écran barrière de parallaxe (2) par rapport à l'écran (1), et
- à définir précisément, avec une tolérance de la largeur et/ou de la hauteur d'un élément d'image x(i,j) au maximum, l'alignement de l'écran barrière de parallaxe (2) par rapport à l'écran (1) avec des éléments d'image x(i,j), relativement à la position horizontale et/ou verticale relative de l'écran barrière de parallaxe (2) par rapport à l'écran (1).

2. Procédé selon la revendication 1, **caractérisé**
**en ce que** les deux premières lignes, ou plus (6a, 6b), sont disposées perpendiculairement l'une à l'autre.

3. Procédé selon la revendication 1 ou la revendication 2, **caractérisé**
**en ce qu'**au moins une première ligne (6b) est disposée dans la direction des lignes (i) des éléments d'image x(i,j), et au moins une autre première ligne (6a) dans la direction des colonnes (j) des éléments d'image x(i,j).

4. Procédé selon l'une des revendications précédentes, **caractérisé**
**en ce que** dans au moins une des vues A(k) avec n = 6 ou n = 7, chaque première ligne (6a, 6b) se prolonge sans joint exactement, ou au maximum par deux deuxièmes lignes (7a, 7b).

5. Procédé selon la revendication 2 ou la revendication 3, **caractérisé**
**en ce que** quatre angles droits sont contenus dans au moins une des vues A(k) avec n = 6 ou n = 7, lesquels forment une partie cruciforme de par leur disposition, et en ce qu'après l'étape d'alignement de l'écran barrière de parallaxe (2) devant l'écran (1), au moins deux premières lignes (6a, 6b) de l'image capturée par la caméra (3) de la mire affichée peuvent être trouvées à l'intérieur de la partie cruciforme formée par les angles droits, lesdites premières lignes (6a, 6b) s'étendant sensiblement parallèlement aux côtés d'angles droits adjacents et avec le même espacement.

6. Procédé selon l'une des revendications précédentes, **caractérisé en ce que** toutes les premières lignes (6a, 6b) et toutes les deuxièmes lignes (7a, 7b) sont pourvues de la même couleur, la couleur des premières lignes (6a, 6b) se distinguant préférentiellement de celle des deuxièmes lignes (7a, 7b).

7. Procédé selon l'une des revendications précédentes, **caractérisé en ce que** les éléments d'image x(i,j) correspondent à des sous-pixels chromatiques (R, G ou B), des clusters de sous-pixels chromatiques (tels que RG ou GB) ou des pixels chromatiques entiers.

8. Procédé selon l'une des revendications précédentes, **caractérisé en ce que** l'écran barrière de parallaxe (2) est après l'alignement devant l'écran (1) durablement appliqué sur l'écran (1) à une distance (s) définie.

9. Procédé selon l'une des revendications précédentes, **caractérisé en ce que** l'écran (1) utilisé est un écran couleur LCD, un écran plasma, un écran de projection, un écran à base de LED, un écran à base d'OLED, un écran SED ou un écran VFD.

10. Procédé selon l'une des revendications précédentes, **caractérisé en ce que** l'écran barrière de parallaxe (2) comprend des parties transparents et opaques, inclinées suivant un angle (a) par rapport à la verticale.

11. Procédé selon l'une des revendications précédentes, **caractérisé en ce que** l'écran barrière de parallaxe (2) se compose d'un substrat en verre, sur la face arrière duquel la structure de barrière est appliquée.

12. Procédé selon la revendication 11, **caractérisé en ce que** la structure de barrière est un film exposé et développé, laminé sur la face arrière du substrat en verre, la couche d'émulsion du fil photographique n'étant préférentiellement pas opposée au substrat en verre.

13. Procédé selon la revendication 11, **caractérisé en ce que** les zones opaques de la structure de barrière sont formées par une encre imprimée sur le substrat en verre.

14. Procédé selon l'une des revendications précédentes, **caractérisé en ce que** l'écran barrière de parallaxe (2) contient des moyens de réduction des réflexions de lumière parasite, de préférence au moins une couche de traitement anti-reflets par interférence optique.
